# EUROPEAN PATENT SPECIFICATION

(11) **EP 2 575 386 B1**
(45) Date of publication and mention of the grant of the patent: **19.09.2018**
(21) Application number: 12186978.8
(22) Date of filing: 02.10.2012
(51) Int. Cl.: H04W 12/02, H04L 29/06, H04W 4/02

(54) **System and method for Uplink Interception based on Downlink Reception**
System und Verfahren zur Uplink-Abfrage basierend auf dem Downlink-Empfang
Système et procédé d'interception de liaison montante sur la base de réception en liaison descendante

(30) Priority: 02.10.2011 IL 21549211
(43) Date of publication of application: 03.04.2013
(73) Proprietor: Verint Systems Ltd., 46733 Herzilya Pituach (IL)
(72) Inventor: Shloman, Roy, Tel Aviv (IL); Langer, Itai, Bilu 21 (IL); Levy, Ehud, Tel Aviv (IL)
(74) Representative: Smallman, Clint Guy

(56) References cited:
- WO-A2-2007/010220
- DE-A1-102005 015 833
- US-A- 6 138 013

## Description

### FIELD OF THE DISCLOSURE

The present disclosure relates generally to communication monitoring, and particularly to methods and systems for monitoring communication of mobile communication terminals.

### BACKGROUND OF THE DISCLOSURE

Various techniques for monitoring communication in wireless communication networks are known in the art. Some techniques use off-air reception. Other techniques use Direction-Finding (DF) processes.

US 6,138,013 discloses a method for location-based interception in a communication system including determining a location area of a calling or called party and routing a call to an intercept gateway if the location area is determined to be one that is to be monitored.

### SUMMARY OF THE DISCLOSURE

An embodiment that is described herein provides a system including a first receiver and a second receiver. The first receiver is configured to receive a downlink channel transmitted to a communication terminal, and to process the received downlink channel so as to determine one or more parameters of a corresponding uplink channel used for transmitting from the terminal. The second receiver is configured to receive the uplink channel using the parameters determined by the first receiver.

In some embodiments, the second receiver includes a direction-finding subsystem that is configured to measure a location of the terminal by processing the received uplink channel. In an embodiment, the system includes an additional second receiver that is configured to accept the location of the terminal measured by the direction-finding subsystem and to receive at least the uplink channel based on the location. In another embodiment, the second receiver includes one of a communication interception receiver and a spectrum monitoring receiver.

In some embodiments, the downlink is transmitted to the terminal from a base station of a terrestrial communication network, and the uplink channel is transmitted from the terminal to the base station. In a disclosed embodiment, the first receiver is configured to extract an identity of the base station from the received downlink channel, and to estimate a geographical location of the terminal based on the identity of the base station. In an embodiment, the first receiver is configured to direct the second receiver to the terminal using the estimated geographical location of the terminal. In an example embodiment, the first receiver is configured to extract the identity of the base station by extracting a base station identifier from the downlink signal, and querying a list of base station locations using the extracted base station identifier.

In another embodiment, the downlink is transmitted to the terminal from a satellite in a satellite communication network, and the uplink channel is transmitted from the terminal to the satellite. In yet another embodiment, the first receiver is configured to extract signaling information from the received downlink channel and to determine the parameters of the uplink channel based on the extracted signaling information. In still another embodiment, the parameters of the uplink channel include at least one parameter type selected from a group of types consisting of a channel identifier, a channel frequency, a time slot, a synchronization sequence, an indication of a frequency hopping sequence, a modulation scheme and a coding scheme used on the uplink channel.

In an embodiment, the second receiver is configured to receive both the uplink channel and the downlink channel, and to output content of a bidirectional communication session conveyed over the uplink and downlink channels. In another embodiment, the first and second receivers are time-synchronized to one another. In yet another embodiment, the first receiver is configured to process the downlink channel responsively to identifying that the communication terminal is predefined as a target terminal.

In some embodiments, the parameters of the uplink channel are associated with corresponding parameters of the downlink channel in accordance with a predefined relation, and the first receiver is configured to extract the parameters of the downlink channel from the received downlink channel, and to determine the parameters of the uplink channel from the parameters of the downlink channel using the relation. In an embodiment, the first and second receivers are located in respective, different first and second geographical locations. There is additionally provided, in accordance with an embodiment that is described herein, a method including, using a first receiver wherein the first receiver comprises a broadband passive interception subsystem, receiving a downlink channel transmitted to a communication terminal; processing the received downlink channel so as to determine one or more parameters of a corresponding uplink channel used for transmitting from the terminal and using a second receiver, wherein the second receiver is a Direction-Finding (DF) subsystem, receiving the uplink channel using the parameters determined by the first receiver, wherein the DF subsystem is able to locate weak terminals that the broadband passive interception system is unable to locate.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a communication monitoring system, in accordance with an embodiment of the present disclosure; and
Fig. 2 is a flow chart that schematically illustrates a method for communication monitoring, in accordance with an embodiment of the present disclosure.

### DETAILED DESCRIPTION OF EMBODIMENTS

### OVERVIEW

Embodiments that are described herein provide improved methods and systems for monitoring communication of mobile communication terminals, such as cellular phones. The disclosed embodiments combine passive off-air interception of downlink signals with uplink interception in a manner that exploits the advantages and performance benefits of each modality. Uplink interception may involve reception and/or direction finding.

In some disclosed embodiments, a primary receiver (e.g., a broadband passive off-air interception subsystem) monitors communication between mobile communication terminals and base stations in a wireless communication network. The primary receiver attempts to identify communication sessions (e.g., phone calls or data sessions) that are conducted by certain target terminals. Upon identifying such a communication session, a secondary receiver (e.g., a Direction-Finding (DF) subsystem) is invoked to intercept (e.g., receive and/or locate) the target terminal. The secondary receiver intercepts the target terminal by receiving uplink signals that the terminal transmits to the base station.

In some cases, however, the primary receiver is unable to receive the terminals' uplink signals that are to be intercepted by the secondary receiver. A broadband interception subsystem, for example, typically has a considerably poorer receiver sensitivity compared to a DF subsystem. The difference in sensitivity is due, for example, to the fact that the broadband interception subsystem demodulates the received signals whereas the DF subsystem measures the signal power without demodulating it. As a result of this difference, the DF subsystem is often able to locate weak terminals that the broadband interception subsystem is unable to intercept. As another example, the sensitivity of the primary receiver may be poorer than that of the secondary receiver because the primary receiver often covers a considerably wider instantaneous bandwidth.

The methods and systems described herein bridge the above-described sensitivity gap. In some embodiments, the primary receiver intercepts downlink signals (signals transmitted from the base stations to the terminals) rather than uplink signals (signals transmitted from the terminals to the base stations). The downlink signals are usually stronger than the uplink signals, for example because the base stations transmit at higher power and have better line-of-sight to the interception system than the terminals.

In a typical flow, the primary receiver receives multiple downlink channels, extracts the signaling of the communication sessions from the received downlink channels, and attempts to identify sessions held with target terminals. Upon identifying a communication session that, according to its downlink signaling, involves a target terminal, the primary receiver determines parameters of the corresponding uplink channel of that session. Uplink channel parameters may comprise, for example, a channel identifier, channel frequency, time slot, synchronization sequence, frequency hopping sequence, Code Division Multiple Access (CDMA) spreading code, modulation scheme and/or coding scheme. The secondary receiver is then invoked to intercept the target terminal using the uplink channel parameters.

By intercepting downlink channels rather than uplink channels, the primary receiver is able to intercept communication sessions of weak target terminals, and thus enables the secondary receiver to utilize its high sensitivity. By determining the uplink channel parameters from the intercepted downlink channel, the primary receiver is able to direct the secondary receiver to the desired communication sessions with high accuracy. Integrating downlink reception and uplink interception in this manner exploits the relative performance advantages of each technique, and provides a high-performance interception solution.

In some disclosed embodiments, the system comprises multiple secondary receivers, e.g., a DF subsystem and a narrowband, short-range off-air interception subsystem. In a typical flow, the DF subsystem locates the target terminal and provides the measured location (e.g., direction) to the narrowband interception subsystem. The narrowband interception subsystem uses the location information to approach the target terminal and monitor its communication at short range. Unlike the broadband interception system, the narrowband interception system typically intercepts both uplink and downlink channels. When using this technique, the session content including both uplink and downlink (e.g., both directions of a voice call) can be intercepted.

The disclosed system configurations can be viewed as a distributed receivers system, which comprises at least a primary receiver for receiving downlink signals and one or more secondary receivers for receiving uplink signals. The secondary receivers are triggered or directed to the appropriate uplink channels and/or geographical locations using information obtained from the downlink signals by the primary receiver. This sort of system configuration is highly efficient in exploiting and prioritizing the available interception resources.

In a typical embodiment, the primary receiver is located at a high location with unobstructed line of sight. Due to its location, the primary receiver is able to receive and analyze a variety of downlink signals over a relatively large geographical region, either in parallel or serially. The primary receiver controls multiple secondary receivers, each of which covers a smaller geographical region. Using downlink analysis, the primary receiver assigns the various secondary receivers to intercept uplink signals in their respective coverage areas. The secondary receivers may perform functions such as communication interception, spectrum monitoring and/or direction finding.

In an example embodiment, the primary receiver estimates the geographical location of a target terminal, and directs a secondary receiver to that geographical location. The primary receiver may estimate the target terminal's location, for example, by determining the identity of the base station (e.g., CELL_ID) and looking-up the identity in a list or database of known base station coordinates.

### SYSTEM DESCRIPTION

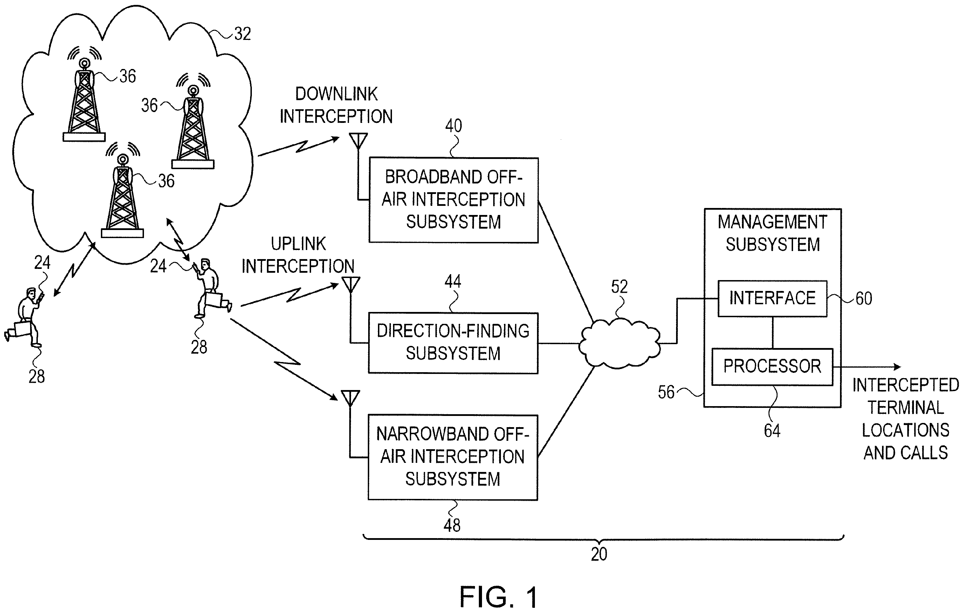

Fig. 1 is a block diagram that schematically illustrates a communication monitoring system 20, in accordance with an embodiment of the present disclosure. System 20 monitors communication sessions conducted by mobile communication terminals 24, which are operated by users 28, in a wireless communication network 32. The communication sessions are typically held by communicating between terminals 24 and base stations 36 of network 32. Monitoring systems of this sort may be operated, for example, by various intelligence or law enforcement agencies, such as for tracking and apprehending suspect individuals.

System 20 typically identifies communication sessions that are held by certain target terminals, intercepts the content of these sessions and also measures the locations of the terminals. The term "communication session" refers to various types of interaction in which a communication terminal conducts bidirectional communication with a base station, such as voice calls, data sessions or any other suitable session type.

Terminals 24 may comprise cellular phones, wireless-enabled mobile computers or Personal Digital Assistants (PDAs) or any other suitable type of terminal having wireless communication capabilities. Network 32 may operate in accordance with any suitable communication standard or protocol. The embodiments described herein refer mainly to Global System for Mobile Communications (GSM) networks operating in the 850, 900, 1800 or 1900MHz band. The disclosed techniques, however, can be used in various other networks such as WiFi, WiMAX, CDMA or any other suitable type of communication network.

In the present example, system 20 comprises a passive broadband off-air interception subsystem 40, a Direction-Finding (DF) subsystem 44 and a passive narrowband off-air interception subsystem 48. These three subsystems monitor communication sessions using methods that are described in detail below.

As explained above, off-air interception subsystem 40 is an example of a primary receiver for receiving downlink signals, and DF subsystem 44 and passive narrowband off-air interception subsystem 48 are examples of secondary receivers for receiving uplink signals. The description that follows refers to these specific types of subsystems. The disclosed techniques, however, can be used in a similar manner with various other kinds of primary and secondary receivers.

The secondary receivers are typically separated geographically from the primary receiver. For example, the primary receiver may be located at a high central location, while the secondary receivers typically cover smaller geographical regions as directed by the primary receiver. Direction of the secondary receivers may be performed automatically, or assisted by an operator of the primary receiver.

A management subsystem 56 manages and coordinates the operation of system 20. Subsystems 40, 44, 48 and 56 communicate with one another using a network 52, e.g., a Wide Area Network (WAN) or Local Area Network (LAN), in the present example a TCP/IP over Ethernet network. Network 52 may comprise a wireless network or other wireless connection. The management subsystem comprises an interface 60 for communicating over network 52, and a processor 64 for performing the various management functions.

The configuration of system 20 shown in Fig. 1 is an example configuration, which is chosen purely for the sake of conceptual clarity. In alternative embodiments, any other suitable system configuration can also be used. For example, in some embodiments narrowband interception subsystem 48 is omitted. Some elements of system 20 may be implemented in hardware, e.g., in one or more Application-Specific Integrated Circuits (ASICs) or Field-Programmable Gate Arrays (FPGAs). Additionally or alternatively, some system elements can be implemented using software, or using a combination of hardware and software elements.

Some of the functions of subsystems 40, 44, 48 and/or 56, such as the functions of processor 64, may be carried out using one or more general-purpose processors, which are programmed in software to carry out the functions described herein. The software may be downloaded to the processors in electronic form, over a network, for example, or it may, alternatively or additionally, be provided and/or stored on non-transitory tangible media, such as magnetic, optical, or electronic memory.

In one example embodiment, DF subsystem 44 comprises a model 803C communication intelligence system offered by TCI, Inc. (Fremont, California). In another example embodiment, subsystem 40 may trigger a receiver model PI2FE, a remote-controlled narrowband receiver for GSM signals that is produced by Verint Systems, Inc. (Melville, New York). Alternatively, any other suitable DF system can be used for this purpose.

### INTEGRATED DOWNLINK OFF-AIR INTERCEPTION AND UPLINK DF

In a typical flow of operations, broadband interception subsystem 40 intercepts communication sessions conducted over network 32, and attempts to identify sessions that are conducted by predefined target terminals. Upon identifying such a session, DF subsystem 44 is invoked to measure the location of the target terminal. The DF subsystem is provided with uplink channel parameters of the session in order to direct it to measure the appropriate uplink channel.

As explained above, however, broadband interception subsystem 40 typically has a poorer receiver sensitivity compared to DF subsystem 44. Therefore, if the broadband interception system were to intercept uplink channels, weak terminals 24 would most likely be missed, even though the DF subsystem is sufficiently sensitive to locate them.

Thus, in some embodiments, broadband interception system 40 receives downlink signals from network 32 and intercepts downlink channels, i.e., channels transmitted from base stations 36 to terminals 24. Subsystem 40 analyzes the intercepted downlink channels in an attempt to identify communication sessions that are held by target terminals.

Subsystem 40 may identify sessions held by target terminals in various ways. For example, subsystem 40 may hold a list of known identifiers of target terminals, extract the terminal identifiers from the received downlink channels and compare them with the identifiers on the list. In alternative embodiments, the list of target terminal identifiers is stored in management subsystem 56, and subsystem 40 queries this list with identifiers extracted from downlink channels.

Upon identifying a session conducted by a target terminal, subsystem 40 determines one or more parameters of the corresponding uplink channel of the session. The uplink channel parameters may comprise, for example, an identifier of the channel, a frequency assigned to the channel, a time slot assigned to the channel, a synchronization sequence associated with the channel, a CDMA spreading code used on the channel, a modulation scheme used on the channel and/or a coding scheme used on the channel. In some embodiments, some or all of the channels in network 32 use frequency hopping. In these embodiments, the uplink channel parameters may comprise an indication of the frequency hopping sequence used on the uplink channel of the session.

Additionally or alternatively, the uplink channel parameters may comprise any other suitable parameter that is indicative of the time-frequency resources used by the uplink channel. In GSM networks, for example, the allocated spectrum is divided into 200KHz frequency channels, and each 4.616mS time frame is divided into eight time slots. Some GSM networks employ frequency hopping at a rate of ∼217 hops per second.

Broadband interception subsystem 40 may determine the uplink channel parameters in various ways. In one example embodiment, subsystem 40 extracts the signaling of the downlink channel of the session, and deduces the uplink channel parameters from the extracted signaling. This deduction may use the fact that the uplink and downlink channel parameters of a given session are related.

For example, the uplink and downlink channels may have a fixed frequency offset between them, they may use the same hopping sequence (possibly with a constant frequency offset), or they may have the same channel identifier (or channel identifiers that are paired using some known convention). By exploiting the relationship between the uplink and downlink channel parameters of the same session, subsystem 40 may determine the uplink channel parameters from the extracted signaling of the downlink channel.

Upon determining the uplink channel parameters of the session, broadband interception subsystem 40 invokes DF subsystem 44 to locate the target terminal. The invocation may be carried out directly between subsystems 40 and 44, or by processor 64 of management subsystem 56. In either case, DF subsystem 44 is provided with the uplink channel parameters, and requested to locate the target terminal that transmits this uplink channel.

The DF subsystem then tunes to the uplink channel in question using the provided uplink channel parameters, receives the uplink signal transmitted on that channel by the target terminal, and measures the terminal location. The location information provided by the DF subsystem typically comprises a direction (e.g., azimuth) of the target terminal relative to the DF subsystem. Alternatively, DF subsystem 44 may produce any other suitable location information of the target terminal.

At this stage, system 20 possesses the location information of the target terminal (measured by the DF subsystem) and partial session content extracted from the downlink channel (by the broadband interception system). The location and/or session content may be output to an operator or recorded for subsequent analysis, e.g., by processor 64.

Note, however, that in some cases the above-described scheme may not be able to intercept the session content carried over the uplink channel, e.g., when target terminal is not within uplink reception range of the broadband interception subsystem. Thus, in some embodiments, system 20 uses narrowband interception subsystem 48 (sometimes referred to as a "front end receiver") to intercept the session content carried over both the uplink and downlink, or at least the session content carried over the uplink. In a typical flow, when DF subsystem 44 measures the target terminal location, narrowband interception subsystem 48 is invoked to intercept the session at short range. The invocation may be carried out directly between subsystems 44 and 48, or via processor 64 of management subsystem 56.

In some embodiments, subsystem 48 comprises a short-range interception subsystem that may be installed in a vehicle. Subsystem 48 may use the location information measured by the DF subsystem to approach the target terminal in order to intercept its uplink signal at short range. In some embodiments, subsystem 48 further accepts the uplink channel parameters determined by subsystem 40, and uses these parameters to tune to the appropriate uplink channel.

Thus, using the combination of subsystems 40, 44 and 48, system 20 possesses the location of the target terminal as well as the session content from both the uplink and downlink. This information may be output to an operator or recorded for subsequent analysis, e.g., by processor 64.

Typically, subsystems 40, 44 and 48 are time-synchronized to a common time base in order to coordinate their interception operations. Such synchronization is important, for example, when some of the uplink channel parameters (e.g., time slots and hopping sequences) are time-dependent. Synchronization can be implemented in various ways. For example, each of subsystems 40, 44 and 48 may comprise a Global Positioning System (GPS) receiver that provides an accurate timing signal (denoted 1pps).

In these embodiments, the various subsystems of system 20 synchronize to the same time base using the GPS-derived 1pps signal. For example, when broadband interception subsystem 40 or management subsystem 56 provides uplink channel parameters to DF subsystem 44, the uplink channel parameters are provided together with a time stamp. Similarly, when DF subsystem 44 or management subsystem 56 provides location information and/or uplink channel parameters to narrowband interception subsystem 48, the information is provided together with a time stamp.

### MONITORING METHOD DESCRIPTION

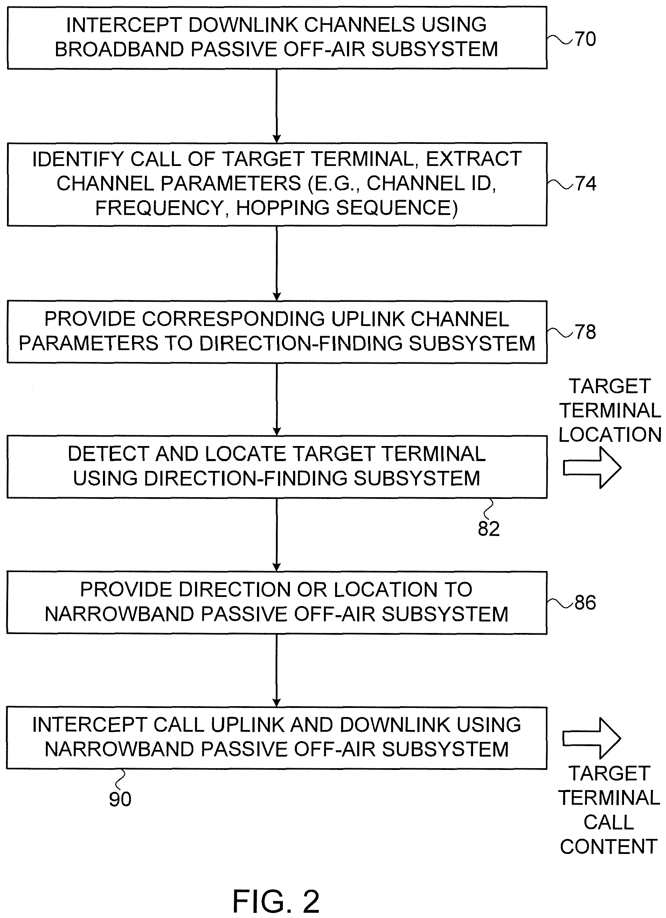

Fig. 2 is a flow chart that schematically illustrates a method for communication monitoring, in accordance with an embodiment of the present disclosure. The method begins with broadband off-air interception subsystem 40 intercepting downlink channels of network 32, at a downlink interception step 70. Subsystem 40 (or management subsystem 56) identifies a downlink channel of a communication session (e.g., telephone calls) conducted by a target terminal, at a target channel identification step 74.

Subsystem 40 (or subsystem 56) processes the identified downlink channel so as to determine one or more parameters of the corresponding uplink channel of this session. Subsystem 40 (or subsystem 56) provides the uplink channel parameters to DF subsystem 44, at a parameter output step 78.

DF subsystem 44 tunes to the uplink channel of the session in question using the uplink parameters, and measures the location of the target terminal (e.g., azimuth from the DF subsystem), at a location measurement step 82. The system may then output the measured location and/or the downlink session content. In embodiments where subsystem 48 is omitted, the method terminates at this stage.

In embodiments that comprise narrowband interception subsystem 48, DF subsystem 44 provides the measured location of the target terminal to the narrowband interception subsystem, at a location output step 86. The narrowband interception subsystem uses the location information to receive the target terminal at short range, at an uplink interception step 90. The narrowband interception subsystem may intercept the content of both the uplink and the downlink channel of the session. System 20 may output this content and/or the measured terminal location.

Although the embodiments described herein mainly address terrestrial wireless networks such as cellular networks, the principles of the present disclosure can also be used for monitoring other types of networks. For example, the disclosed techniques can be used for locating and monitoring satellite terminals in Mobile Satellite Service (MSS) networks such as Thuraya. In this embodiment, a system such as system 20 may intercept a downlink channel from a satellite (also referred to as forward link), determine the corresponding uplink (terminal to satellite - also referred to as reverse link) channel parameters, and then perform DF measurements on this uplink channel in order to locate the satellite terminal.

In some embodiments, off-air interception subsystem 40 extracts the identity of the base station (e.g., a CELL_ID parameter) from the received downlink channel. Subsystem 40 or management subsystem 56 determines the geographical location of this base station, for example by querying a list or database of known base station coordinates. The base station coordinates provide a general estimate of the geographical location of the terminal, since the terminal can be assumed to be located within the geographical region served by the base station. The estimated geographical location of the terminal can be used, for example, for directing DF subsystem 44 or narrowband interception subsystem 48 to intercept the terminal's uplink.

The embodiments described herein refer mainly to the use of downlink reception for assigning resources to perform uplink interception. The disclosed principles, however, can also be used for assigning downlink interception resources based on uplink reception, for example when a given receiver is able to receive uplink transmissions but not downlink transmissions.

The scope of the invention is defined by the appended claims.

## Claims

1. A method, comprising:
using a first receiver, wherein the first receiver comprises a broadband passive interception subsystem (40), receiving a downlink channel transmitted to a communication terminal (24);
processing the received downlink channel so as to determine one or more parameters of a corresponding uplink channel used for transmitting from the terminal (24); and
using a second receiver, wherein the second receiver is a Direction-Finding (DF) subsystem (44), receiving the uplink channel using the parameters determined by the first receiver (40), wherein the DF subsystem (44) is able to locate terminals (24) sending weak signals that the broadband passive interception subsystem (40) is unable to locate.

2. The method according to claim 1, wherein receiving the uplink channel comprises measuring a location of the terminal (24) by processing the received uplink channel.

3. The method according to claim 2, wherein receiving the uplink channel comprises providing the location of the terminal (24) measured by the direction-finding subsystem (44) to an additional second receiver (48), and receiving at least the uplink channel by the additional second receiver (48) based on the location.

4. The method according to claim 1, wherein the second receiver (48) comprises one of a communication interception receiver and a spectrum monitoring receiver.

5. The method according to claim 1, wherein the downlink is transmitted to the terminal (24) from a base station (36) of a terrestrial communication network (32), and wherein the uplink channel is transmitted from the terminal (24) to the base station (36).

6. The method according to claim 5, wherein processing the received downlink channel comprises extracting an identity of the base station (36) from the received downlink channel, and estimating a geographical location of the terminal (24) based on the identity of the base station (36).

7. The method according to claim 6, and comprising directing the second receiver (44) to the terminal (24) using the estimated geographical location of the terminal (24).

8. The method according to claim 6, wherein extracting the identity of the base station (36) comprises extracting a base station identifier from the downlink signal, and querying a list of base station locations using the extracted base station identifier.

9. The method according to claim 1, wherein the downlink is transmitted to the terminal (24) from a satellite in a satellite communication network, and wherein the uplink channel is transmitted from the terminal (24) to the satellite.

10. The method according to claim 1, wherein processing the received downlink channel comprises extracting signaling information from the received downlink channel and determining the parameters of the uplink channel based on the extracted signaling information.

11. The method according to claim 1, wherein the parameters of the uplink channel comprise at least one parameter type selected from a group of types consisting of a channel identifier, a channel frequency, a time slot, a synchronization sequence, an indication of a frequency hopping sequence, a modulation scheme and a coding scheme used on the uplink channel.

12. The method according to claim 1, and comprising receiving the downlink channel in addition to the uplink channel using the second receiver (44), and outputting content of a bidirectional communication session conveyed over the uplink and downlink channels.

13. The method according to claim 1, and comprising time-synchronizing the first and second receivers (40, 44) to one another.

14. The method according to claim 1, wherein processing the downlink channel comprises analyzing the downlink channel responsively to identifying that the communication terminal (24) is predefined as a target terminal.

15. The method according to claim 1, wherein the parameters of the uplink channel are associated with corresponding parameters of the downlink channel in accordance with a predefined relation, and wherein processing the downlink channel comprises extracting the parameters of the downlink channel from the received downlink channel, and determining the parameters of the uplink channel from the parameters of the downlink channel using the relation.

## Patentansprüche

1. Verfahren, das Folgendes umfasst:
Verwenden eines ersten Empfängers, wobei der erste Empfänger ein passives Breitband-Abfangteilsystem (40) umfasst, das einen zu einem Kommunikationsendgerät (24) übertragenen Downlink-Kanal empfängt;
Verarbeiten des empfangenen Downlink-Kanals, um einen oder mehrere Parameter eines entsprechenden Uplink-Kanals zu ermitteln, der zum Übertragen von dem Endgerät (24) verwendet wird; und
Verwenden eines zweiten Empfängers, wobei der zweite Empfänger ein Peilungs-(DF)-Teilsystem (44) ist, das den Uplink-Kanal mithilfe der vom ersten Empfänger (40) ermittelten Parameter empfängt, wobei das DF-Teilsystem (44) fähig ist, Endgeräte (24) zu finden, die schwache Signale senden, die vom passiven Breitband-Abfangteilsystem (40) nicht gefunden werden können.

2. Verfahren gemäß Anspruch 1, wobei das Empfangen des Uplink-Kanals das Messen eines Standorts des Endgerätes (24) durch Verarbeiten des empfangenen Uplink-Kanals umfasst.

3. Verfahren gemäß Anspruch 2, wobei das Empfangen des Uplink-Kanals das Bereitstellen des vom Peilungs-Teilsystem (44) gemessenen Standorts des Endgerätes (24) zu einem zusätzlichen zweiten Empfänger (48), und das Empfangen zumindest des Uplink-Kanals durch den zusätzlichen zweiten Empfänger (48) auf der Basis des Standorts umfasst.

4. Verfahren gemäß Anspruch 1, wobei der zweite Empfänger (48) entweder einen Kommunikationsabfangempfänger oder einen Spektrumüberwachungsempfänger umfasst.

5. Verfahren gemäß Anspruch 1, wobei der Downlink von einer Basisstation (36) eines terrestrischen Kommunikationsnetzwerks (32) zu dem Endgerät (24) übertragen wird, und wobei der Uplink-Kanal von dem Endgerät (24) zu der Basisstation (36) übertragen wird.

6. Verfahren gemäß Anspruch 5, wobei das Verarbeiten des empfangenen Downlink-Kanals das Extrahieren einer Identität der Basisstation (36) von dem empfangenen Downlink-Kanal sowie das Schätzen einer geografischen Lage des Endgerätes (24) auf der Basis der Identität der Basisstation (36) umfasst.

7. Verfahren gemäß Anspruch 6, wobei das Verfahren das Leiten des zweiten Empfängers (44) zu dem Endgerät (24) mithilfe der geschätzten geografischen Lage des Endgerätes (24) umfasst.

8. Verfahren gemäß Anspruch 6, wobei das Extrahieren der Identität der Basisstation (36) das Extrahieren einer Basisstationskennung von dem Downlink-Signal sowie das Abfragen einer Liste von Basisstationsstandorten mithilfe der extrahierten Basisstationskennung umfasst.

9. Verfahren gemäß Anspruch 1, wobei der Downlink von einem Satelliten in einem Satelliten-Kommunikationsnetzwerk zu dem Endgerät (24) übertragen wird, und wobei der Uplink-Kanal von dem Endgerät (24) zu dem Satelliten übertragen wird.

10. Verfahren gemäß Anspruch 1, wobei das Verarbeiten des empfangenen Downlink-Kanals das Extrahieren von Signalisierungsinformationen von dem empfangenen Downlink-Kanal und das Ermitteln der Parameter des Uplink-Kanals auf der Basis der extrahierten Signalisierungsinformationen umfasst.

11. Verfahren gemäß Anspruch 1, wobei die Parameter des Uplink-Kanals mindestens einen aus einer Gruppe von Typen ausgewählten Parametertyp umfassen, die aus einer Kanalkennung, einer Kanalfrequenz, einem Zeitfenster, einer Synchronisationssequenz, einer Anzeige einer Frequenzsprungsequenz, einem auf dem Uplink-Kanal verwendeten Modulationsschema und einem Codierschema besteht.

12. Verfahren gemäß Anspruch 1, wobei das Verfahren das Empfangen des Downlink-Kanals zusätzlich zu dem Uplink-Kanal mithilfe des zweiten Empfängers (44) und das Ausgeben des Inhalts einer bidirektionalen Kommunikationssitzung umfasst, die über den Uplink- und Downlink-Kanal übermittelt wird.

13. Verfahren gemäß Anspruch 1, wobei das Verfahren das zeitliche Synchronisieren des ersten und zweiten Empfängers (40, 44) aufeinander umfasst.

14. Verfahren gemäß Anspruch 1, wobei das Verarbeiten des Downlink-Kanals das Analysieren des Downlink-Kanals in Reaktion auf das Identifizieren, dass das Kommunikationsendgerät (24) als Ziel-Endgerät vordefiniert ist, umfasst.

15. Verfahren gemäß Anspruch 1, wobei die Parameter des Uplink-Kanals im Einklang mit einer vordefinierten Beziehung mit entsprechenden Parametern des Downlink-Kanals verbunden sind, und wobei das Verarbeiten des Downlink-Kanals das Extrahieren der Parameter des Downlink-Kanals von dem empfangenen Downlink-Kanal sowie das Ermitteln der Parameter des Uplink-Kanals von den Parametern des Downlink-Kanals unter Verwendung der Beziehung umfasst.

## Revendications

1. Procédé, consistant à :
à l'aide d'un premier récepteur, le premier récepteur comprenant un sous-système d'interception passive large bande (40), recevoir un canal de liaison descendante transmis à un terminal de communication (24) ;
traiter le canal de liaison descendante reçu de façon à déterminer un ou plusieurs paramètres d'un canal de liaison montante correspondant utilisé pour une transmission depuis le terminal (24) ; et
à l'aide d'un second récepteur, le second récepteur étant un sous-système de radiogoniométrie (DF) (44), recevoir le canal de liaison montante à l'aide des paramètres déterminés par le premier récepteur (40), le sous-système DF (44) pouvant localiser des terminaux (24) qui envoient des signaux faibles que le sous-système d'interception passive large bande (40) est incapable de localiser.

2. Procédé selon la revendication 1, dans lequel la réception du canal de liaison montante consiste à mesurer un emplacement du terminal (24) en traitant le canal de liaison montante reçu.

3. Procédé selon la revendication 2, dans lequel la réception du canal de liaison montante consiste à fournir l'emplacement du terminal (24) mesuré par le sous-système de radiogoniométrie (44) à un second récepteur (48) supplémentaire, et à recevoir au moins le canal de liaison montante par le second récepteur (48) supplémentaire sur la base de l'emplacement.

4. Procédé selon la revendication 1, dans lequel le second récepteur (48) comprend un récepteur d'interception de communication ou un récepteur de surveillance de spectre.

5. Procédé selon la revendication 1, dans lequel la liaison descendante est transmise au terminal (24) depuis une station de base (36) d'un réseau de communication terrestre (32), et dans lequel le canal de liaison montante est transmis depuis le terminal (24) vers la station de base (36).

6. Procédé selon la revendication 5, dans lequel le traitement du canal de liaison descendante reçu consiste à extraire une identité de la station de base (36) présente dans le canal de liaison descendante reçu, et à estimer un emplacement géographique du terminal (24) sur la base de l'identité de la station de base (36).

7. Procédé selon la revendication 6, et consistant à orienter le second récepteur (44) vers le terminal (24) à l'aide de l'emplacement géographique estimé du terminal (24).

8. Procédé selon la revendication 6, dans lequel l'extraction de l'identité de la station de base (36) consiste à extraire un identifiant de station de base à partir du signal de liaison descendante, et à demander une liste d'emplacements de station de base à l'aide de l'identifiant de station de base extrait.

9. Procédé selon la revendication 1, dans lequel la liaison descendante est transmise au terminal (24) depuis un satellite dans un réseau de communication par satellite, et dans lequel le canal de liaison montante est transmis depuis le terminal (24) vers le satellite.

10. Procédé selon la revendication 1, dans lequel le traitement du canal de liaison descendante reçu consiste à extraire des informations de signalisation présentes dans le canal de liaison descendante reçu et à déterminer les paramètres du canal de liaison montante sur la base des informations de signalisation extraites.

11. Procédé selon la revendication 1, dans lequel les paramètres du canal de liaison montante comprennent au moins un type de paramètre sélectionné dans un groupe de types consistant en un identifiant de canal, une fréquence de canal, un intervalle de temps, une séquence de synchronisation, une indication d'une séquence de saut de fréquence, un schéma de modulation et un schéma de codage utilisé sur le canal de liaison montante.

12. Procédé selon la revendication 1, et consistant à recevoir le canal de liaison descendante en plus du canal de liaison montante à l'aide du second récepteur (44), et à sortir un contenu d'une session de communication bidirectionnelle transportée sur les canaux de liaisons montante et descendante.

13. Procédé selon la revendication 1, et consistant à réaliser une synchronisation temporelle des premier et second récepteurs (40, 44) l'un avec l'autre.

14. Procédé selon la revendication 1, dans lequel le traitement du canal de liaison descendante consiste à analyser le canal de liaison descendante en réponse à l'identification que le terminal de communication (24) est prédéfini comme terminal cible.

15. Procédé selon la revendication 1, dans lequel les paramètres du canal de liaison montante sont associés à des paramètres correspondants du canal de liaison descendante conformément à une relation prédéfinie, et dans lequel le traitement du canal de liaison descendante consiste à extraire les paramètres du canal de liaison descendante du canal de liaison descendante reçu, et à déterminer les paramètres du canal de liaison montante à partir des paramètres du canal de liaison descendante à l'aide de la relation.
